# EUROPEAN PATENT APPLICATION

(11) **EP 1 475 153 A2**
(43) Date of publication of application: **10.11.2004**
(21) Application number: 04076352.6
(22) Date of filing: 04.05.2004
(51) Int. Cl.: B03B 9/06, H01J 9/00

(54) **Machine for the demolition and cleaning of the glass of kinescopes**

(30) Priority: 05.05.2003 IT VI20030091
(71) Applicant: Eco. El. S.r.l., 36073 Cornaredo Vicentino (Vicenza) (IT)
(72) Inventor: Cora', Marco Enrico, 36073 Cornedo Vicentino (Vicenza) (IT)
(74) Representative: De Gregori, Antonella

(57) **Abstract**

A machine for the demolition and cleaning of the glass of kinescopes (12), comprising a press (14), inside which the kinescope (12) is placed, by means of an arm (13) driven by a guiding piston; the machine allows the glass of the kinescope (12) to be demolished, by first collecting the ferrous material (18) contained in the kinescope (12), and then effecting a further cleaning of the glass, by mechanically removing the phosphorus layer deposited on the front surface of the screen. All operations are fully automatic, without any manual intervention.

## Description

The present invention relates to a machine for the demolition and cleaning of the glass of kinescopes.

More specifically, the invention relates to a machine suitable for demolishing the kinescopes of television sets, computers and any other equipment using a display screen, with the contemporaneous cleaning of the powders (the surface phosphorus layer) contained therein and deposited on a surface layer of the screen.

The kinescope of television sets, computers, etc.. is mainly composed of a glass cone containing a capsule made of ferrous material.

The front surface of the kinescope (screen) is also coated with a layer of small phosphorus particles, which are normally struck by an electron beam, suitably directed and diverted to obtain a selective lighting of the screen.

The particular construction of kinescopes, as previously described, causes several problems when these must be disposed of, as the separation operations of the materials of which they are composed are difficult, but necessary for the collection and reuse of the same, from both a technical and environmental point of view.

Nowadays, in order to effect the brush-up of the screen glass to remove the surface layer of phosphorus, it is absolutely necessary to previously remove the iron structure which forms the frame of the kinescope.

For this purpose, a first phase of the traditional process for the separation of the components, includes the separation of the metal and plastic components and a controlled perforation operation of the cone; this is a very delicate phase as, if the perforation is not effected under well-controlled conditions, there is the danger of implosion of the cone.

At the end of this phase, still according to the traditional methods, the separation of the glass components of the kinescope must be effected, such as the front panel, consisting of the screen, and the rear cone.

The separation is effected manually, using a circular saw with a diamond blade and edge; solutions have also been proposed with fixed circular saws and laser cuts, which however are neither efficient nor convenient.

As described above, it is clear that to proceed with the cleaning of the screen glass, it is absolutely necessary to previously remove the iron frame and, once this ferrous material has been removed, the brush-up of the phosphorus powders can be effected.

This brushing operation is also still effected manually, using suitable instruments, in order to obtain, at the end of the above operations, an optimum size of the components to allow them to be re-melted; to do this, further fragmentation and sieving operations are necessary on the collected and subdivided material.

As an alternative to the manual mechanical brushing operation of the phosphorus powders present on the surface layer of a kinescope screen, a further proposal was made to obtain the desired results by using chemical components; the main obstacle, however, lies in the fact that resort must be made to extremely sophisticated chemical processes, in this case, capable of removing the phosphorus layer from the glass panel, separating the powders from the resinous matrix which acts as an adhesive during the chemical reaction and, finally, recovering the chemical substances used.

The separation and removal of the ferrous material are also quite complex operations, for a complete and correct re-use of the materials forming a kinescope.

According to the known technique, in fact, it is also possible to remove the iron by making use of magnetic systems; also this technology however contemplates an entrainment phase of the screen glass without any reclamation process of the same, together with an abrupt and violent movement of the iron with a consequent excessive scattering of the poisonous powders contained in the phosphorus surface layer.

An objective of the present invention is therefore to obviate the above problems and, in particular, to provide a machine for the demolition and cleaning of the glass of kinescopes, which allows the removal of the ferrous material of the kinescope, and proceed with a brushing of the glass, in order to remove the phosphorus powder contained in the surface layer, in a fully automatic way, without any operator who manually carries out these operations.

Another objective of the present invention is to provide a machine for the demolition and cleaning of the glass of kinescopes which proves to be extremely reliable and allows an evident saving of labour costs during the reclamation and re-use operations of the kinescope components, as all operations are automatic and controlled by an electronic system operated by a PLC, so that the only operation to be effected by the operator is to load the kinescope inside the machine.

A further objective of the present invention is to provide a machine for the demolition and cleaning of the glass of kinescopes which guarantees complete safety during all the separation and reclamation phases.

Another objective of the present invention is to provide a machine for the demolition and cleaning of the kinescope glass which allows considerable advantages to be obtained, with respect to the known art, from an environmental point of view, as there is no danger of dispersing harmful substances in the environment, such as phosphorus powders which form the surface layer of the kinescope screen.

A last but not least important objective of the invention is to provide a machine for the demolition and cleaning of the glass of kinescopes which can be easily and economically produced, without resorting to particularly costly components and/or complex technologies.

These and other objectives are achieved by means of a machine for the demolition and cleaning of the glass of kinescopes according to claim 1, to which reference is made for the sake of brevity.

Further objectives and advantages of the present invention will appear evident from the following description and enclosed drawings, which are supplied for illustrative and non-limiting purposes, wherein:
- figure 1 shows a front view of the machine for the demolition and cleaning of the glass of kinescopes, according to the present invention, after the loading operations of the kinescope;
- figure 2 shows a front view of the loading and pressing device of the kinescope present inside the machine, according to the invention;
- figures 3 and 4 show further views of the loading and pressing device inside the machine, according to the invention, during two subsequent operation phases of the machine;
- figure 5 is a front view of the glass collection system, deriving from the demolition of the kinescope inside the machine, according to the present invention;
- figure 6 is a schematic view of the brushing and collecting system of the phosphorus layer present on the kinescope screen;
- figure 7 is a front view of the machine for the demolition and cleaning of the glass of kinescopes according to the invention, during the removal phase of the iron structure which forms the frame of the kinescope;
- figure 8 shows a detail of the removal operation of the iron structure from the machine, according to the invention.

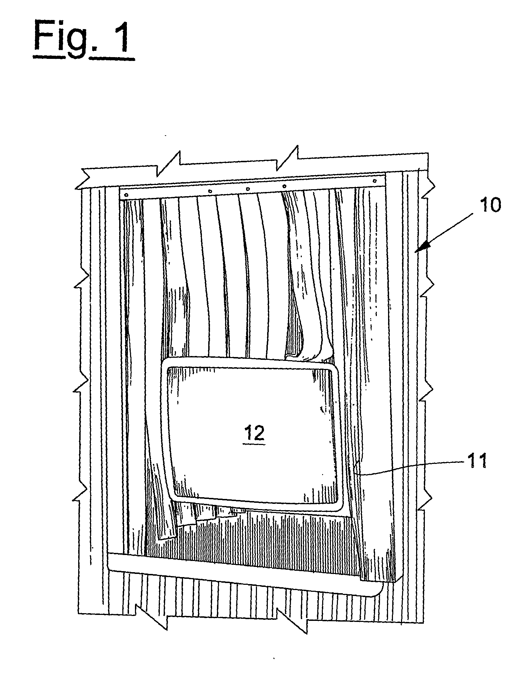

With reference to the above-mentioned figures, the machine for the demolition and cleaning of the glass of kinescopes according to the present invention, includes an external frame 10 on which an opening 11 is inserted, in correspondence with a portion of the same and in a position accessible to the operator, through which it is possible to insert the kinescope 12 to be demolished inside the machine (see, in particular, figure 1, which shows this sequence of operations).

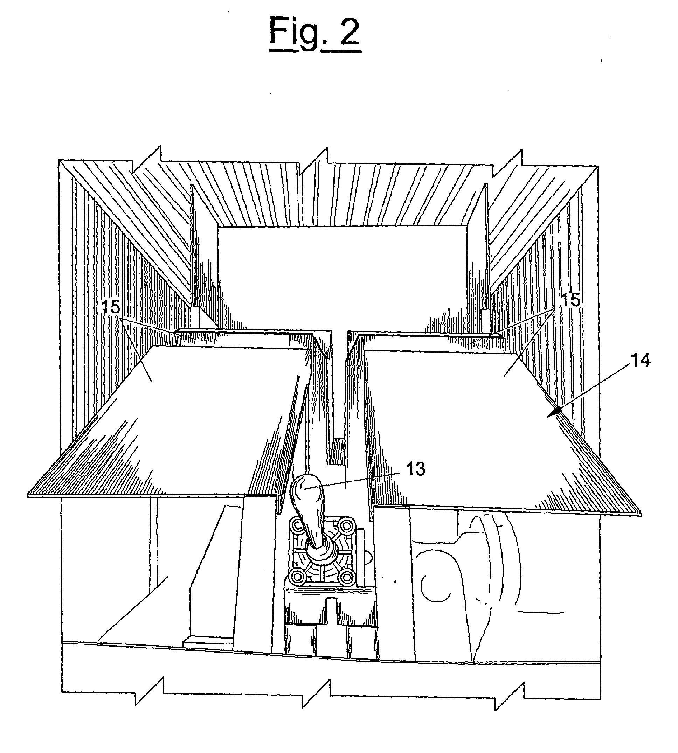

In particular, an overturning and pressing mechanism of the kinescope 12, is present inside the machine, according to the invention, which comprises an arm 13, connected to a guiding piston, which makes it rotate following a circumference arc and forces it move longitudinally, forwards and backwards, following automatic inputs from a motor to the guiding piston; the overturning and pressing mechanism of the kinescope 12, also comprises a press 14, consisting of two couples of plates 15, on which the kinescope 12 is stuck and pressed to completely demolish it (figure 2).

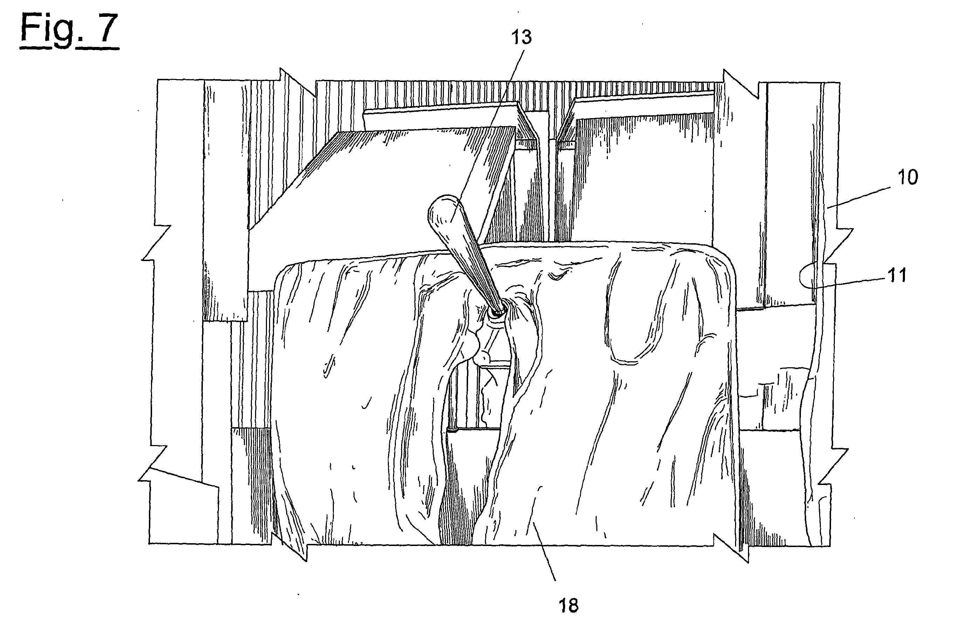

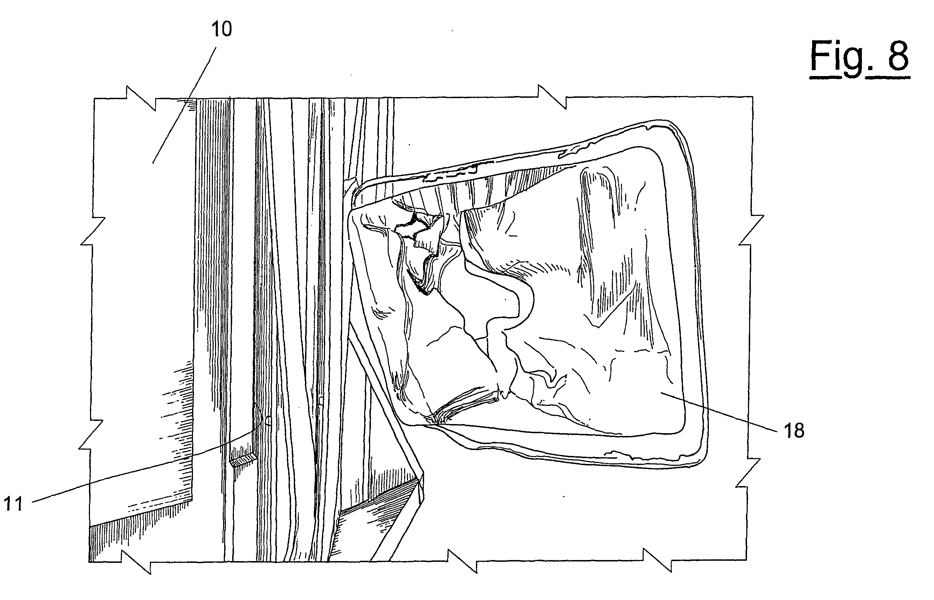

In particular, the pressing is performed in such a way as to guarantee a controlled demolition of the kinescope 12 glass, and furthermore, during the pressing phase, the loading and guiding piston which drives the arm 13, is moved in such a way as to perforate the frame 18 in order to hook said frame 18, made of ferrous material, of the kinescope 12 (see the attached figures 7 and 8).

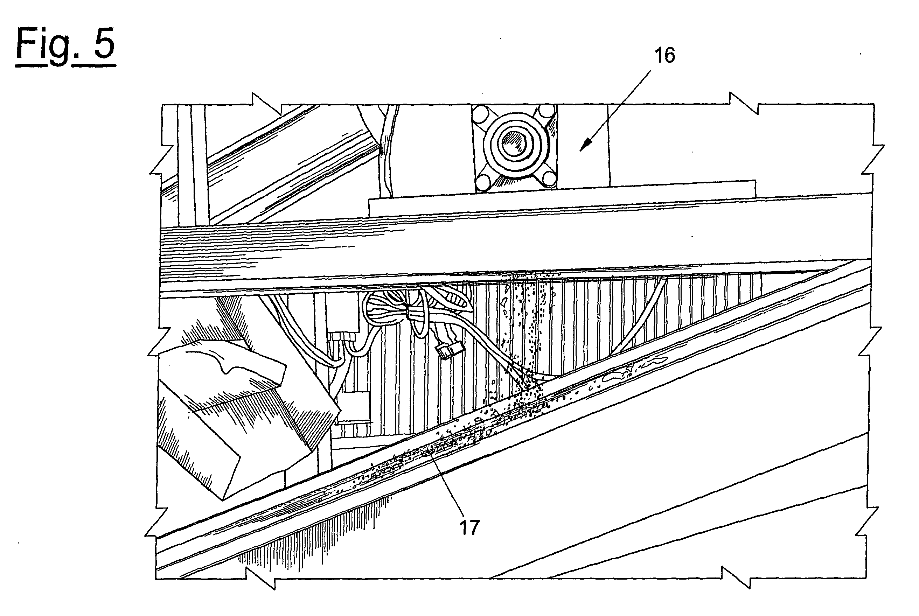

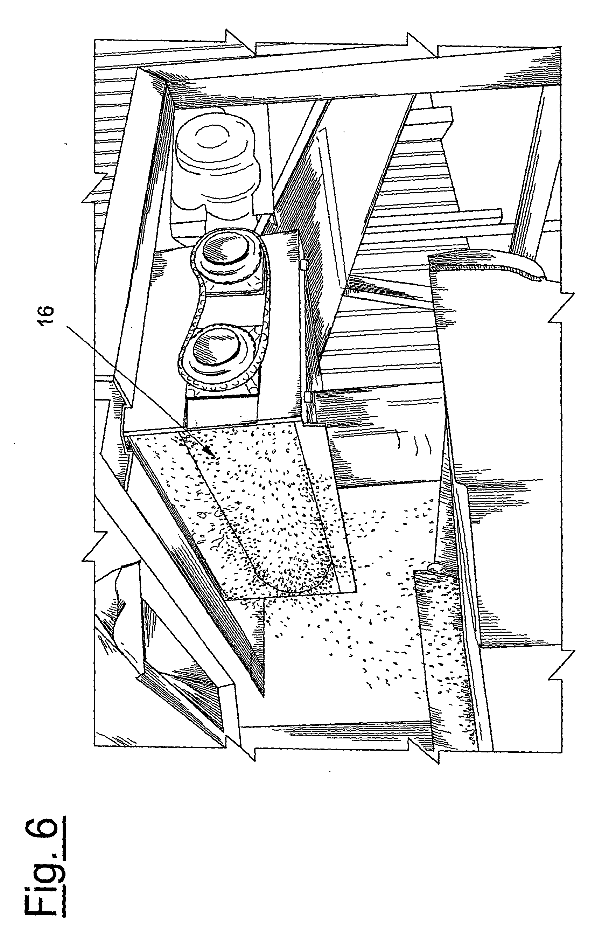

The machine also comprises an automatic brushing system of the phosphorus layer present on the front surface of the kinescope 12 glass, said system being generically indicated as 16 in figures 5 and 6, and a device 17 for the collection and transporting of the glass which is detached by falling off; in particular, the collection and transporting device 17 can consist of a guide or roller conveyor, which carries the glass residues inside a dedicated dumpster used for the sorting of waste.

The machine also comprises a sucking device, which sucks the phosphorus powder detached from the kinescope 12 glass during the brushing up and pressing phase, from the inside towards the outside; furthermore, the kinescope 12 glass is overrun, already during the pressing phase, by controlled air streams, for its complete cleaning.

The functioning of the demolition and cleaning machine of kinescope glass according to the present invention, is, substantially, the following:

When the machine is started up, the arm 13 of the guiding pneumatic piston is facing the operator, in correspondence with the opening 11 of the frame 10; at this point the operator only has to load the kinescope 12 into the machine, so that the arm 13 is completely inserted inside the hole of the cathode tube which generates the electron beam for the visualization of the images.

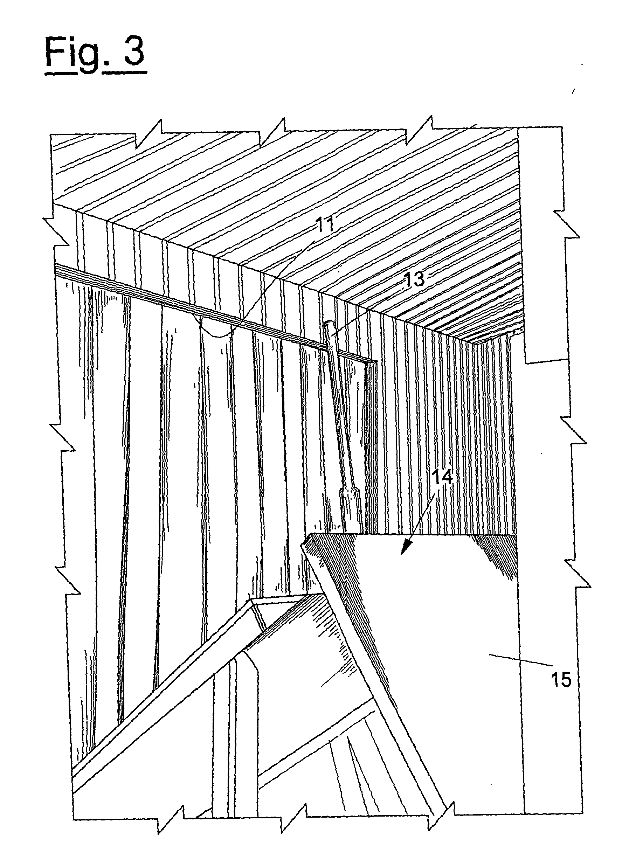

Following the start-up command to the machine, sent by the operator from a remote position, the arm 13 gradually rotates towards the inside of the machine, so as to transport the kinescope 12 towards the press 14; once this position is reached, the arm 13 automatically extends, according to the dimensions of the kinescope 12, in order to deposit the kinescope inside the pressing plates 15 (figure 3).

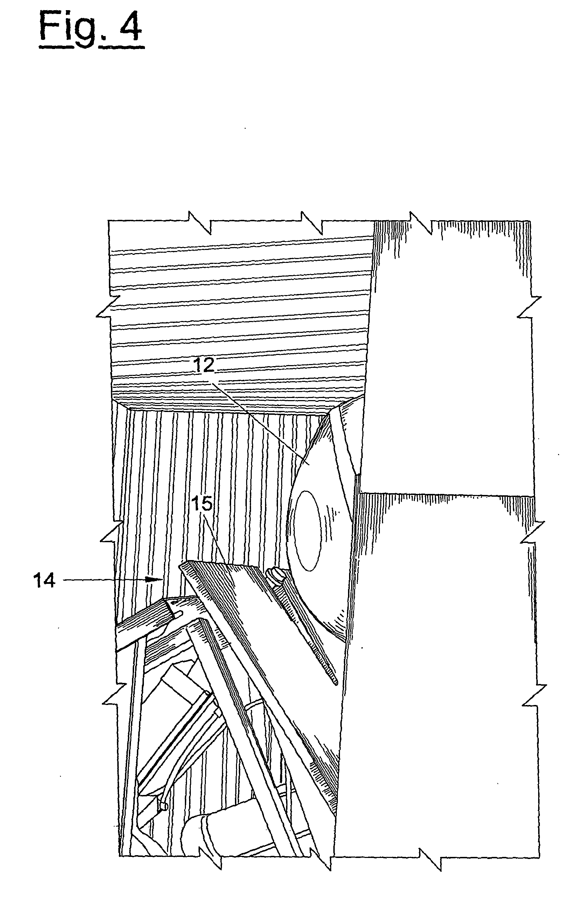

The process continues automatically when the press 14 is activated, so that the kinescope is completely demolished by the mechanical action of the controlled pressing of the plates 15 against the inner walls of the machine (see, in particular, figure 4).

Together with the pressing phase, a hooking system of the ferrous material is activated (frame) 18 and a brushing-up phase is started for the complete removal of the phosphorus layer present on the front surface of the glass of the kinescope 12; the glass residues due to the pressing phase are collected inside specific dumpsters, by means of a guide or roller conveyor system 17.

In the same way, the phosphorus powder brushed up and possibly collected in suitable containers, is sucked from inside the machine towards the outside, in order to avoid problems of pollution of the atmosphere and/or of the work site.

At the end of the pressing phase, the ferrous material (frame) of the kinescope 12, generically indicated with 18 in figure 7, remains hooked to the arm 13 which, in the meantime, has returned to its elongated position following an automatic command sent by the machine control system; finally, a further automatic phase of the process contemplates the return of the arm 13 to its initial position and the opening of the hooking system of the frame 18, along the same run previously covered during the loading and pressing phase, so that the ferrous material 18 can be transported and available to the operator in correspondence with the opening 11 of the outer frame 10 of the machine.

The operator can therefore easily and comfortably manually collect the ferrous material 18 from inside the machine and unload it into specific dumpsters for the sorting of the ferrous material (see figure 8).

As already mentioned, the glass material of the kinescope is collected, after its detachment from the frame by falling, in the lower part of the machine and, by means of a guiding roller conveyor 17, is also sent to the appropriate dumpster; according to other embodiments of the invention, after the guiding conveyor 17, it is possible to insert, further brushes for a more accurate cleaning of the glass from the phosphorus dust present on its surface.

An operative and control software program, of the PLC type, controls, in full autonomy, the overall functioning of the machine.

The above machinery therefore allows the sorting of the various materials present in the kinescope, in a fully automatic way, and also allows the automatic collection of the ferrous material 18, the latter normally being a rather complex operation.

Further advantages of the present invention consist in the fully automatic positioning of the kinescope 12 in the pressing system, to allow the operator to be as far away as possible from the press 14, and, in addition, the kinescope 12 is inserted inside the machine in such a way that the glass material can be detached by falling off; any other position of the kinescope would inevitably cause, during the pressing phase, an entraining or collection effect for the glass, which would therefore be mixed with the ferrous material 18 to be collected, without allowing the glass to be previously cleaned and reclaimed.

The automatic collection and entrainment system of the ferrous material 18, with the consequent collection on the part of the operator in correspondence with the front opening 11 of the machine, allows a complete reclamation of the same ferrous material 18, with the complete lack of scattering of harmful powders due to an excessive shaking of the kinescope 12; in this respect, it should be noted that the collection of the ferrous material 18, was normally effected, according to the known art, by means of simple magnetic systems, which implied the entraining of the glass, without its complete reclamation, and the abrupt and violent movement of the ferrous material, with an excessive scattering of the toxic powders coming from the removal of the phosphorus layer present on the glass surface.

The characteristics of the machine for the demolition and cleaning of the glass of kinescopes, object of the present invention, are evident from the above description, as are also its advantages.

It is obvious that numerous other variations can be applied to the machine in question, all included in the novelty principles inherent to the inventive idea, and that, in the practical embodiment of the invention, the materials, forms and dimensions of the details illustrated can clearly vary according to necessity, and can be replaced with other equivalent elements.

## Claims

1. A machine for the demolition and cleaning of the glass of kinescopes (12), comprising a frame (10) having at least one opening (11) for the introduction of the kinescope (12) by an operator, **characterized in that**, inside the machine, there are means (13) for the transporting and positioning of the kinescope (12) in a pressing system, pressing devices (14), suitable for the controlled demolishing of the kinescope glass (12), which detaches by falling off during the pressing phase, means (16) for the mechanical removal of the phosphorus layer deposited on the front surface of the kinescope (12) screen, and collecting, transporting and differentiated disposal means (17) of the glass material forming the kinescope (12), of the phosphorus powder removed from the screen of said kinescope (12) and the residual ferrous material (18) which is part of the kinescope (12).

2. The machine according to claim 1, **characterized in that** all transporting and positioning operations of the kinescope (12), the pressing, mechanical removal of the phosphorus layer and collecting and disposal of the ferrous material, the glass material and the phosphorus powder, are completely automatic, controlled by an applicative software program, without having to resort to any manual intervention.

3. The machine according to claim 1, **characterized in that** said opening (11) of the outer frame (10), accessible to an operator, allows the introduction of the kinescope (12) to be demolished.

4. The machine according to claim 1, **characterized in that** said means (13) for the transporting and positioning of the kinescope (12), comprise an arm (13) which can rotate along a circumference arc and further move along at least one longitudinal direction, forwards and backwards, following automatic commands from the machine.

5. The machine according to claim 1, **characterized in that** said compression means (14) comprise a press equipped with plates (15) on which the kinescope (12) is positioned for a complete controlled demolition.

6. The machine according to claim 1, **characterized in that** said collecting, transporting and disposal means (17) comprise at least a guide or roller conveyor which transports the glass residues inside a specific dumpster used for the sorting of waste material and/or at least a sucking device, which sucks, from the inside towards the outside, the phosphorus powder detached from the glass of the kinescope (12) during the mechanical removal phase, and/or air streams.

7. The machine according to claim 1, **characterized in that** said mechanical removal phase of the phosphorus powder from the glass of the kinescope (12) effected by means of a brushing system and/or air streams, is carried out together with the pressing phase.

8. The machine according to claim 4, **characterized in that**, at the end of the pressing phase, the ferrous material (18) of which the kinescope (12) consists, remains hooked to said arm (13), acquiring an elongated initial position, so that said ferrous material (18) is presented unhooked to the operator, in correspondence with the opening (11) of the outer frame (10) of the machine, so that the same operator can manually collect it from inside the machine and unload it.
